# EUROPEAN PATENT APPLICATION

(11) **EP 3 309 771 A1**
(43) Date of publication of application: **18.04.2018**
(21) Application number: 17169917.6
(22) Date of filing: 08.05.2017
(51) Int. Cl.: G09F 3/20, H01R 9/24, H01R 9/26, H01R 13/46, H02B 1/00, G09F 3/02

(54) **METHOD AND SYSTEM FOR MAKING EQUIPMENT MODULE MARKINGS IN THE SWITCH PANEL OR SWITCH CABINET OF A SWITCHBOARD**

(30) Priority: 11.10.2016 FI 20165773
(71) Applicant: Martten Finland Oy, 15610 Lahti (FI)
(72) Inventor: TOMMOLA, Jukka, 15320 Lahti (FI); SUOMI, Jussi, 15140 Lahti (FI); JAUHIAINEN, Risto, 15700 Lahti (FI)
(74) Representative: Genip Oy

(57) **Abstract**

In the method for making equipment module markings in the switch panel or switch cabinet of a switchboard:
- information on each equipment module in a switch panel or switch cabinet is selected automatically on the basis of the electrical network information included in a switchboard;
- the width of the respective equipment module is identified or selected automatically on the basis of the equipment module information; and
- the information is transferred to a printer (8) for the printing of the equipment module markings of each equipment module of a switch panel or switch cabinet onto a strip, where the equipment module information is printed onto the respective strip (5) so that the length of the strip (5) or part of strip to be printed corresponds to the width of the equipment module.

Includes a parallel device claim.

## Description

### Field of invention

The invention is related to electrical engineering, more specifically to equipment module markings in a switch panel or switch cabinet.

### Technical background

Various kinds of equipment modules are used in switchboards.

The equipment modules must be marked by descriptions. At present, this requires much manual work.

### Objective of invention

The objective of the invention is to expedite the marking of the equipment modules in the switch panel or switch cabinet of a switchboard.

This objective can be accomplished by means of the method and system according to the independent claims.

The dependent claims describe the advantageous embodiments of the method and system.

### Advantages of invention

In the method for making equipment module markings in the switch panel or switch cabinet of a switchboard, the information on each equipment module of a switch panel or switch cabinet is selected automatically on the basis of the electrical network information included in the switchboard - most advantageously on the basis of a switchboard diagram or cable installation list. The width of the respective equipment module is identified or selected automatically on the basis of the equipment module information. The information on each equipment module is transferred to a printer for the printing of the equipment module markings of a switch panel or switch cabinet onto a strip, where the equipment module information is printed onto the respective strip so that the length of the strip or part of strip to be printed corresponds to the width of the equipment module.

The strip can be but does not have to be cut automatically to correspond to the width of the respective module. If the strip is not cut, the markings of adjacent equipment modules in the switch panel or switch cabinet can be printed onto the same strip (in other words, the parts of the strip are printed one after the other). In this case, the information on the printed strip also indicates the installation order of the equipment modules.

The equipment modules can comprise one or more of the following: fuse or residual current device.

When the equipment module is a fuse, the length of the strip or part of strip to be printed is advantageously selected in a different manner in each case depending on whether the fuse is a single-phase fuse or a three-phase fuse.

In addition to this or as an alternative to this, when the equipment module is a fuse, the length of the strip or part of strip is selected in a different manner in each case depending on whether the fuse is an automatic fuse or a plug fuse.

The automatically-formed equipment module markings most advantageously include an equipment module description (best in a text format). In addition to this or instead of this, the automatically-formed equipment module markings may include the cable or electric wire type.

Each strip is fastened most advantageously to the switch panel or switch cabinet in connection with the corresponding equipment module. The fastening can be carried out before the installation of the equipment module, at the same time or after the installation of the equipment module. As stated above, if the strips have not been cut after the printing of the information on an individual equipment module (in other words the parts of the strip are one after the other), the information on all adjacent equipment modules in the switch panel or switch cabinet can be fastened at the same time.

Most advantageously, the strip is a label and the printer is a label printer.

The method for making equipment module markings in the switch panel or switch cabinet of a switchboard comprises:
- a data processing device and/or data processing system,
- into which electrical network information is saved or which is configured to read electrical network information from some system that contains electrical network information; and
- which is programmed to identify or select the width of the respective equipment module automatically on the basis of the equipment module information; and
- which is programmed to transfer the information to a printer for the printing of the equipment module markings of each equipment module in a switch panel or switch cabinet onto a strip; and
- a printer, which is most advantageously a label printer.

In the system, the data processing device and printer are adapted to execute a method according to the first aspect of the invention.

### List of drawings

In what follows, the invention is presented in more detail by means of the exemplary embodiment shown in the enclosed drawings. Of the drawings:

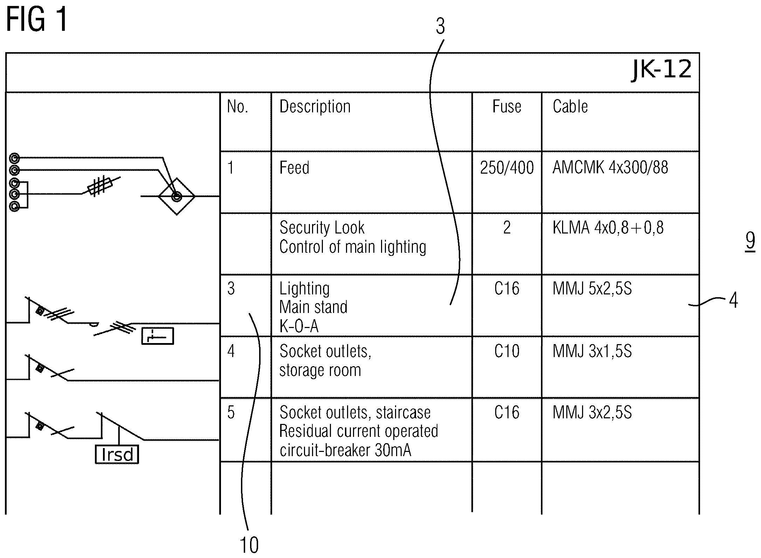

- FIG 1: shows a switchboard diagram;

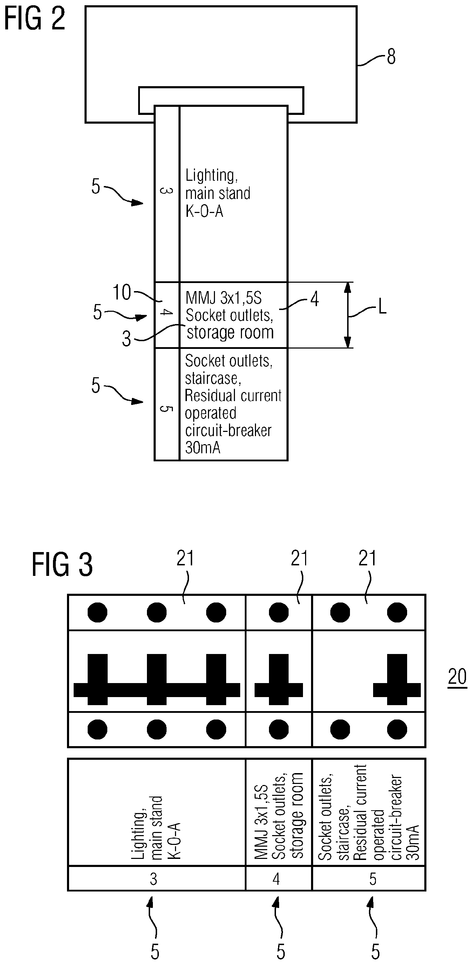

- FIG 2: shows a strip to be printed by means of a printer, onto which strip several parts of strip have been printed one after the other; and
- FIG 3: shows the fastening of the strip to a switch panel or switch cabinet.

The same reference numbers refer to the same technical characteristics in all FIGs.

### Detailed description

On the basis of electrical network information 9 - most advantageously on the basis of information obtained from a switchboard diagram or as an alternative to this or in addition to this from a cable installation list - the method and system according to the invention can be used to print the markings of equipment modules 21 in the switch panel or switch cabinet 20 of a switchboard.

In the method for making equipment module markings in the switch panel or switch cabinet of a switchboard:
- information (such as equipment module description 3, electric wire or cable type 4, equipment module identifier 10) on each equipment module 21 in a switch panel or switch cabinet is selected automatically on the basis of the electrical network information 9 included in a switchboard 20;
   - the width of the respective equipment module 21 is identified or selected automatically on the basis of the equipment module information; and
   - the information is transferred to a printer 8 for the printing of the equipment module markings of each equipment module in a switch panel or switch cabinet onto a strip, where the equipment module 21 information is printed onto the respective strip 5 so that the length of the strip 5 to be printed corresponds to the width of the equipment module.

The equipment modules 21 can be fuses (for example single-phase fuses, three-phase fuses), residual current devices or plug fuses.

In the method, the equipment modules are separated from each other based on the types, by means of the information obtained from the electrical network information. A text-format description is combined to each equipment module 21. On the basis of this information, the strips 5 for the marking of individual equipment modules 21 can be printed for example so that the strips fit directly to the switch panel or switch cabinet (for example in the main switchboard).

Earlier, it has been necessary to write the markings by hand, and it has been necessary to cut the marking strips manually so that their width while fastened to the switch panel or switch cabinet corresponds to the width of the respective equipment module 21.

In the method according to the invention, when the equipment module is a fuse 21, the length of the strip 5 or part of strip can be selected in a different manner in each case depending on whether the fuse is a single-phase fuse or a three-phase fuse. Correspondingly, when the equipment module 21 is a fuse, the length of the strip 5 or part of strip is selected in a different manner in each case depending on whether the fuse is an automatic fuse or a plug fuse.

As stated above, the automatically-formed equipment module markings most advantageously include an equipment module description 3. In addition to this or instead of this, the automatically-formed equipment module markings may include the cable or electric wire type 4.

Each strip 5 is fastened to the switch panel or switch cabinet in connection with the corresponding equipment module 21. The fastening can be carried out before the installation of the equipment module 21, at the same time or after the installation of the equipment module 21.

Most advantageously, the strip 5 is a label and the printer 8 is a label printer.

The system for making equipment module markings in the switch panel or switch cabinet of a switchboard comprises:
- a data processing device and/or data processing system,
   - into which electrical network information is saved or which is configured to read electrical network information from some system that contains electrical network information; and
   - which is programmed to identify or select the width of the respective equipment module 21 automatically on the basis of the equipment module 21 information; and
- which is programmed to transfer the information to a printer 8 for the printing of the equipment module markings of each equipment module 21 in a switch panel or switch cabinet onto a strip
- a printer 8, which is most advantageously a label printer; and where
the data processing device and printer 8 are adapted to implement the method according to any one of the preceding claims.

The invention should not be understood to be limited only by the below claims, but the invention is to be understood to include all their legal equivalents and the combinations of the embodiments presented.

### List of reference numbers used:

- 3: equipment module description
- 4: electric wire or cable type
- 5: strip
- 8: printer
- 9: switchboard diagram
- 10: equipment module identifier
- 20: switch panel or switch cabinet
- 21: equipment module

## Claims

1. A method for making equipment module markings in the switch panel or switch cabinet of a switchboard, **in which method:**
- information on each equipment module in a switch panel or switch cabinet is selected automatically on the basis of the electrical network information included in a switchboard;
- the width of the respective equipment module is identified or selected automatically on the basis of the equipment module information; and
- the information is transferred to a printer (8) for the printing of the equipment module markings of each equipment module of a switch panel or switch cabinet onto a strip, where the equipment module information is printed onto the respective strip (5) so that the length of the strip (5) or part of strip to be printed corresponds to the width of the equipment module.

2. A method according to claim 1, **wherein:** the electrical network information used is a switchboard diagram (9) and/or a cable installation list.

3. A method according to claim 1 or 2, **wherein:** the equipment modules comprise one or more of the following: fuse, residual current device.

4. A method according to any one of the preceding claims, **wherein:** when the equipment module is a fuse, the length of the part of the strip (5) to be printed is selected in a different manner in each case depending on whether the fuse is a single-phase fuse or a three-phase fuse.

5. A method according to claim 3 or 4, **wherein:** when the equipment module is a fuse, the length of the part of the strip (5) to be printed is selected in a different manner in each case depending on whether the fuse is an automatic fuse or a plug fuse.

6. A method according to any one of the preceding claims, **wherein:** the automatically-formed equipment module markings include an equipment module description (3).

7. A method according to any one of the preceding claims, **wherein:** the automatically-formed equipment module markings include the cable or electric wire type (4).

8. A method according to any one of the preceding claims, **wherein:** each strip (5) is fastened to the switch panel or switch cabinet in connection with the corresponding equipment module. The fastening can be carried out before the installation of the equipment module, at the same time or after the installation of the equipment module.

9. A method according to any one of the preceding claims, **wherein:** the strip (5) is a label and the printer (8) is a label printer.

10. A system for making equipment module markings in the switch panel or switch cabinet of a switchboard, **which comprises:**
- a data processing device and/or data processing system,
- into which electrical network information is saved or which is configured to read electrical network information from some system that contains electrical network information; and
- which is programmed to identify or select the width of the respective equipment module (21) automatically on the basis of the equipment module (21) information; and
- which is programmed to transfer the information to a printer (8) for the printing of the equipment module markings of each equipment module (21) in a switch panel or switch cabinet onto a strip (5);
- a printer (8), which is most advantageously a label printer; and wherein
the data processing device and printer (8) are adapted to implement the method according to any one of the preceding claims.
